# FASCICULE DE BREVET EUROPEEN

(11) **EP 2 472 063 B1**
(45) Date de publication et mention de la délivrance du brevet: **11.02.2015**
(21) Numéro de dépôt: 10197416.0
(22) Date de dépôt: 30.12.2010
(51) Int. Cl.: F01D 5/28

(54) **Aube en matériau composite**
Leitschaufel aus Verbundmaterial
Vane made of a composite material

(43) Date de publication de la demande: 04.07.2012
(73) Titulaire: Techspace Aero S.A., 4041 Milmort (BE)
(72) Inventeur: Grelin, Hervé, 89340 Villeblevin (FR); Berard, Sacha, 4020 Liège (BE)
(74) Mandataire: Pronovem

(56) Documents cités:
- DE-C1- 4 237 031
- US-A- 2 859 936
- US-A- 3 762 835
- US-A1- 2010 080 710
- US-A1- 2010 150 707

## Description

### Objet de l'invention

La présente invention se rapporte à une aube composite utilisée dans tout domaine (aéronautique, énergie etc.) où l'énergie d'un flux est exploitée. Plus particulièrement, la présente invention se rapporte à une aube en composite utilisée dans une turbomachine.

La présente invention se rapporte également à un étage fixe ou un étage de rotor de turbomachine comportant ces aubes composites.

La présente invention se rapporte aussi à un procédé de fabrication d'une aube en matériau composite.

### Etat de la technique

Les compresseurs axiaux sont bien connus en soi et sont utilisés entre autres dans les turbomachines.

Ces compresseurs basse ou haute pression comportent plusieurs étages d'aubes tournantes, encore appelées aubes mobiles, qui sont séparés par des étages redresseurs qui ont pour but de repositionner le vecteur vitesse du fluide sortant de l'étage précédent avant de l'envoyer vers l'étage suivant.

Les étages redresseurs sont constitués essentiellement d'aubes fixes, encore appelées aubes redresseur, reliant une virole extérieure à une virole intérieure, toutes deux concentriques et délimitant la zone d'écoulement d'air ou veine aérodynamique.

De nos jours, les aubes redresseurs de turbomachine sont réalisées dans des matériaux métalliques tels que des alliages de titane (TA6V), en acier ou en aluminium.

Il existe des aubes de forme simple en matériau composite telles que les aubes directrices de sortie (OGV pour *Outlet Guide Vane*) situées dans la veine secondaire d'un turboréacteur et qui sont réalisées par un procédé de dépôt manuel de tissus pré-imprégnés ou par le procédé RTM (pour *Resin Transfer Moulding*) à partir de préformes sèches tressées ou tissées.

On connaît aussi du brevet US 2,859,936 A un procédé de fabrication d'une aube de forme droite où l'aube comprend en son pied un insert métallique qui sert à positionner des fibres imprégnées de résine et où un mélange de résine et de fibres courtes est ensuite ajouté dans le moule et vient recouvrir et entourer les fibres pré-imprégnées.

On connaît aussi de la demande US 2010/0080710 A1 un procédé de fabrication de pales d'OGV où deux tôles métalliques sont soudées pour former la peau de l'aube et un espace au sein duquel un matériau plastique est injecté. La cohésion entre les différents composants de l'aube est assurée par la seule liaison mécanique entre la peau et le coeur.

On connaît également de la demande US 2010/0129651 A1 succédant à la demande précitée, un procédé de fabrication de pales d'aubes de soufflante ou de stator où une couche de polyuréthane est insérée entre la peau métallique et le matériau composite du coeur afin d'assurer une meilleure liaison entre le coeur et la peau, et ainsi réduire le risque de délaminage, et également afin d'absorber les différences de dilation entre le matériau composite du coeur et la peau métallique.

On connaît aussi de la demande US 2010/0150707 A1 un procédé de fabrication de pales d'aubes en matériau composite, telles que des OGV, où la pale comporte une enveloppe creuse formée de couches distinctes de matériau composite et comporte en outre un noyau de forme ondulée disposé dans l'enveloppe et assurant l'écartement des parois de l'enveloppe. Des plateformes sont rapportées aux extrémités de la pale par soudage ou collage.

On connaît en outre du document DE 42 37 031 C1 une aube de stator réglable. Elle comporte une pale pivotante autour d'un axe de réglage et un bras de levier coudé par rapport à l'axe de réglage, tous deux formant une seule pièce. L'aube est en matériau composite. La pale est formée d'une couche extérieure qui est un tissu de fibres de carbone et d'un coeur qui est un faisceau de fibres de carbone, tous deux étant dispersés au sein d'une même matrice.

Les procédés de fabrication d'aubes composites de l'état de la technique présentent chacun un ou plusieurs des inconvénients suivants:
- ils ne permettent pas la réalisation de forme complexe;
- ils permettent la réalisation d'aubes d'épaisseur relativement importantes (15-20 mm) telles que les aubes OGV et ne permettent pas la réalisation d'aubes de compresseur avec des épaisseurs plus réduites (inférieures à 10 mm);
- la ou les plateformes de l'aube ne sont pas intégrées avec la pale de l'aube et doivent donc être rapportées ultérieurement;
- la cohésion entre les parties constitutives de l'aube est assurée par une liaison mécanique.

### Buts de l'invention

La présente invention vise à fournir une solution qui permette de s'affranchir des inconvénients de l'état de la technique.

La présente invention vise ainsi à réaliser des aubes de forme complexe et ce, en limitant les opérations d'usinage ou de finition ultérieurs.

La présente invention vise en outre à réaliser des aubes avec une large gamme d'épaisseur possible.

La présente invention vise également à réaliser des aubes avec une pale et une plateforme d'un seul tenant.

La présente invention vise en outre à réaliser des aubes où la cohésion entre les différentes parties constitutives est assurée grâce à une liaison chimique.

### Principaux éléments caractéristiques de l'invention

La présente invention se rapporte à une aube de turbomachine en matériau composite selon la revendication 1.

Selon des modes particuliers de l'invention, l'aube comporte au moins une ou une combinaison appropriée des caractéristiques des revendications 2-12.

La présente invention se rapporte aussi à un procédé de fabrication d'une aube de turbomachine selon la revendication 13.

La présente invention se rapporte aussi à un étage redresseur ou à un étage de rotor d'une turbomachine comprenant des aubes composites telles que décrites ci-dessus.

### Brève description des figures

La figure 1 représente une vue schématique en coupe transversale de la pale d'une aube selon l'invention.

La figure 2 représente une vue schématique en coupe longitudinale de la pale d'une aube intégrant une plateforme selon l'invention.

La figure 3 représente une vue schématique de face d'une aube selon l'invention.

### Légende

(1) Aube
(2) Pale
(3) Plateforme ou bulbe de l'aube ou, de manière plus générale, moyen de fixation de l'aube à un élément extérieur
(4) Fibres longues
(5) Fibres courtes

### Description générale de l'invention

L'aube selon la présente invention peut être utilisée dans tout domaine où des aubes, qu'elles soient mobiles ou statiques, sont nécessaires. Dans le domaine aéronautique, elle peut être, par exemple, utilisée comme aube de compresseur ou comme aube directrice de sortie (OGV).

Selon la présente invention, l'aube est réalisée en matériau composite et comporte un renfort en fibres continues, qu'on appellera aussi fibres longues, et un renfort en fibres courtes. Une matrice organique est associée à chaque renfort de telle sorte que toutes les matrices sont identiques ou compatibles chimiquement afin d'assurer une liaison chimique entre les différents composants. Les matrices organiques peuvent être des résines thermoplastiques ou des résines thermodurcissables.

Le renfort en fibres continues sert à assurer la rigidité structurale des aubes alors que le renfort en fibres courtes associé à sa résine est utilisé pour réaliser le remplissage du volume et donner à l'aube sa forme finale ou presque finale. L'assemblage de ces deux matériaux permet ainsi de réaliser les formes complexes que peut présenter l'aube et d'obtenir directement la forme finale de l'aube, c'est-à-dire intégrant la pale et son moyen de fixation, en sortie de moule après fabrication.

Préférentiellement, les fibres continues sont unidirectionnelles ou tissées et les fibres courtes sont de quelques millimètres de longueur ou moins. Selon l'invention, les fibres courtes et continues peuvent être de même nature ou de nature différente. Par exemple, les fibres longues et courtes peuvent être respectivement des fibres de carbone ou des fibres de verre. Les fibres au sein des fibres courtes ou au sein des fibres longues peuvent être également de nature différente; par exemple, les fibres longues peuvent comporter des fibres de verre et des fibres de carbone.

Préférentiellement, les fibres courtes sont disposées au coeur de l'aube et les fibres continues en extrême peau, dans ce cas les fibres continues épousent la surface externe de l'aube, ou en position intermédiaire entre l'extrême peau et le coeur. Dans ce dernier cas, les fibres courtes mélangées à la résine comblent également l'espace entre la position intermédiaire et l'extrême peau. La présente invention s'étend également à des modes de réalisation où, sur la longueur des fibres, une même fibre longue est disposée successivement en extrême peau de l'aube et en position intermédiaire.

Optionnellement, la surface de l'aube composite selon l'invention peut comporter une protection contre l'érosion.

### Description détaillée de l'invention

La présente invention est détaillée ci-dessous, à titre indicatif non limitatif, pour une aube utilisée dans une turbomachine et, plus précisément, pour une aube utilisée dans la première partie de la turbomachine, dans la partie dite basse pression.

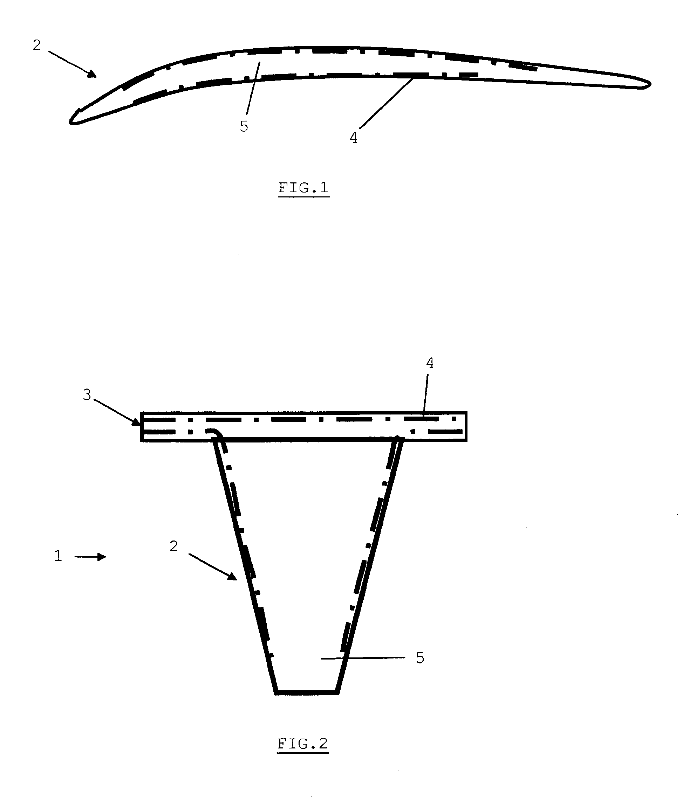

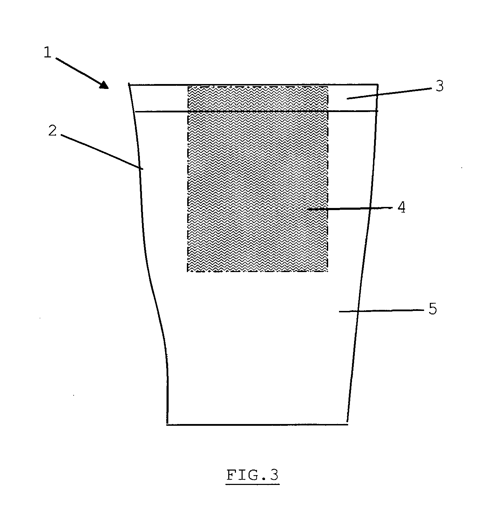

Selon la présente invention et tel qu'illustré à la figure 2, l'aube 1 comporte une pale 2 et en pied de pale une plateforme 3 ou, de manière générale, un moyen assurant la fixation de l'aube à un élément extérieur. Dans le cas particulier d'une aube redresseur de compresseur, la pale comporte un pied à sa première extrémité qui est destiné à être rapporté à une virole extérieure du compresseur tandis que l'autre extrémité, la tête de pale, est destinée à être assemblée à une virole intérieure du compresseur. Si le pied est de type plateforme, il peut former un T comme présenté à la figure 2, un L ou toute autre forme adaptée. Dans l'exemple illustré à la figure 3, le pied de pale comporte, à la place d'une plateforme, un bulbe 3 en queue d'aronde. Ce bulbe présente ainsi deux faces inclinées s'évasant depuis le pied de pale vers une troisième face perpendiculaire au plan de la pale. La présente invention s'étend également à la réalisation d'une aube composite comportant uniquement une pale.

Les figures 1 à 3 représentent de manière schématique la disposition des fibres longues 4 et des fibres courtes 5 au sein d'une section transversale de la pale, au sein d'une coupe longitudinale du pied de la pale avec plateforme intégrée et au sein de l'aube vue dans son entièreté. Le renfort en fibres longues 4 est disposé en peau ou à proximité de la peau de l'aube et le reste de l'aube est rempli avec un renfort en fibres courtes 5. Comme illustré aux figures 1 à 3, seule une partie de la peau peut être composée du renfort en fibres longues, la peau de l'aube non composée du renfort en fibres longues étant alors comblée avec un renfort en fibres courtes. Ainsi, la peau de la pale au niveau des bords d'attaque et de fuite peut être dépourvue de fibres longues et comporter uniquement des fibres courtes. De même, le renfort en fibres longues peut s'étendre en peau dans la direction longitudinale de l'aube depuis la plateforme de l'aube jusqu'à une distance sensiblement égale à la mi-hauteur de la pale, cette distance pouvant bien entendu être modulée.

Comme illustré à la figure 2, les fibres longues sont préférentiellement continues entre la pale et la plateforme ou, de manière générale, entre la pale et le moyen de fixation de l'aube à un élément extérieur.

L'aube selon l'invention peut être réalisée à l'aide d'un procédé donné ci-dessous à titre indicatif non limitatif pour la fabrication d'une aube thermoplastique avec un moyen de fixation intégré tel que, par exemple, une plateforme. Le procédé comporte successivement au moins les étapes suivantes:
a) fabrication de plaques pré-consolidées, c.à.d. ayant subi une densification au moins partielle, comportant les fibres longues 4 et une première résine thermoplastique;
b) découpage des plaques aux dimensions requises;
c) formage des plaques;
d) moulage par injection du coeur de la pale 2 et du coeur du moyen de fixation 3 avec une seconde résine thermoplastique chargée en fibres courtes, la seconde résine étant identique à la première résine ou chimiquement compatible avec la première résine, lesdites plaques préformées jouant le rôle d'inserts composites dans le moule d'injection.

Selon l'invention, la forme finale de l'aube peut être directement obtenue en sortie de moule. Après l'étape d) de moulage par injection, la pièce peut aussi subir d'autres opérations telles que des opérations d'usinage ou toute autre opération nécessaire à la mise en place d'une protection contre l'érosion. Une protection contre l'érosion peut également être directement intégrée à la pièce par ajout de charges dans la première et/ou la seconde résine lors de la fabrication.

Comme déjà mentionné, de par l'utilisation d'une même résine ou de résines compatibles chimiquement à l'étape a) et d), les différentes parties constitutives de l'aube sont liées par une liaison chimique.

Le procédé s'étend à la réalisation d'aubes thermoplastiques ou thermodurcissables avec une peau au moins partiellement en fibres longues et un coeur au moins partiellement en fibres courtes, les étapes du procédé pouvant être adaptées en conséquence.

On précisera aussi que, préférentiellement, le renfort en fibres continues est un pré-imprégné si on réalise une aube composite à matrice thermoplastique alors qu'il s'agit d'un renfort sec ou un pré-imprégné si on réalise une aube composite à matrice thermodurcissable, par exemple, de type époxy.

### Avantages de l'invention

Les aubes ainsi réalisées bénéficieront d'un gain de masse par rapport à l'existant grâce à l'utilisation de matériaux composites.

Elles bénéficieront également d'un coût de fabrication limité grâce à la réduction du nombre d'étapes dans le procédé de fabrication, la forme finale pouvant être obtenue directement en sortie de moule.

L'utilisation d'une même résine ou de résines compatibles pour les fibres continues et les fibres courtes permet d'obtenir une liaison chimique entre les différents composants (au sein de la pale et entre la pale et le moyen de fixation) et d'obtenir au final une aube composite avec une matrice continue.

L'aube selon l'invention permet ainsi de fabriquer des aubes fixes ou des aubes mobiles à faible masse et faible coût.

## Revendications

1. Aube (1) de turbomachine en matériau composite comprenant une pale (2) et, à une extrémité de la pale (2), un moyen de fixation (3) de ladite aube (1) à un élément extérieur, ledit moyen de fixation (3) étant intégré à la pale (2) de l'aube, **caractérisée en ce que** ladite aube (1) comporte une première résine renforcée par des fibres continues (4), aussi appelées fibres longues, et une seconde résine renforcée par des fibres courtes (5) d'une longueur inférieure à quelques millimètres, lesdites première et seconde résines étant chimiquement compatibles ou identiques, les fibres continues (4) étant disposées en extrême peau de l'aube (1) ou en position intermédiaire entre l'extrême peau et le coeur de l'aube (1) et les fibres courtes (5) étant disposées au coeur de l'aube (1) ainsi qu'entre la position intermédiaire et l'extrême peau lorsque les fibres continues sont disposées en position intermédiaire, lesdites fibres continues (4) servant à rigidifier l'aube (1) et lesdites fibres courtes (5) dispersées dans la seconde résine servant à combler les parties de l'aube non renforcées par les fibres continues (4) et donnant à l'aube (1) sa forme sensiblement finale.

2. Aube (1) de turbomachine selon la revendication 1, **caractérisée en ce qu'**une même fibre continue (4) est disposée sur sa longueur en extrême peau de l'aube (1) et en position intermédiaire entre l'extrême peau et le coeur de l'aube (1).

3. Aube (1) de turbomachine selon l'une quelconque des revendications 1 à 2, **caractérisée en ce que** les fibres continues (4) sont continues entre la pale (2) et le moyen de fixation (3).

4. Aube (1) de turbomachine selon l'une quelconque des revendications précédentes, **caractérisée en ce que** seule une partie de la peau de l'aube (1) est composée d'un renfort en fibres continues (4), la peau de l'aube (1) non composée du renfort en fibres continues (4) étant comblée avec un renfort en fibres courtes (5).

5. Aube (1) de turbomachine selon la revendication 1, **caractérisée en ce que** le moyen de fixation (3) est une plateforme ou un bulbe en queue d'aronde.

6. Aube (1) selon la revendication 5, **caractérisée en ce que** la pale (2) et la plateforme forment un L ou un T.

7. Aube (1) de turbomachine selon la revendication 1, **caractérisée en ce que** les fibres courtes (5) et les fibres continues (4) sont sélectionnées parmi le groupe constitué des fibres de verre et des fibres de carbone.

8. Aube (1) de turbomachine selon la revendication 1, **caractérisée en ce que** les fibres continues (4) sont unidirectionnelles ou tissées.

9. Aube (1) de turbomachine selon la revendication 1, **caractérisée en ce que** les première et seconde résines sont des résines thermoplastiques.

10. Aube (1) selon la revendication 1, **caractérisée en ce que** les première et seconde résines sont des résines thermodurcissables.

11. Aube (1) de turbomachine selon l'une quelconque des revendications précédentes, **caractérisée en ce que** la peau de l'aube (1) comporte en outre une protection contre l'érosion.

12. Aube (1) de turbomachine selon l'une quelconque des revendications précédentes, **caractérisée en ce que** la première résine et/ou la seconde résine comporte(nt) des charges assurant la protection de l'aube contre l'érosion.

13. Procédé de fabrication d'une aube (1) de turbomachine en matériau composite comportant une pale (2) et un moyen de fixation (3) à un élément extérieur, ledit moyen de fixation (3) formant une seule pièce avec ladite pale (2), ladite aube (1) comportant des fibres continues (4), aussi appelées fibres longues, disposées sur au moins une partie de la peau de l'aube (1) et comportant en outre des fibres courtes (5) d'une longueur inférieure à quelques millimètres comblant les parties de l'aube non remplies par les fibres continues (4), ledit procédé comprenant successivement au moins les étapes de:
a) fabrication de plaques pré-consolidées comportant les fibres continues (4) pré-imprégnées d'une première résine thermoplastique;
b) découpage des plaques aux dimensions requises;
c) formage des plaques;
d) moulage par injection du coeur de la pale (2) et du coeur du moyen de fixation (3) avec une seconde résine thermoplastique chargée en fibres courtes, ladite seconde résine étant identique à la première résine ou chimiquement compatible avec la première résine, lesdites plaques préformées jouant le rôle d'inserts composites dans le moule d'injection.

14. Etage redresseur ou étage de rotor d'une turbomachine comportant des aubes selon l'une quelconque des revendications 1 à 12.

## Patentansprüche

1. Leitschaufel (1) eines Turbotriebwerks aus Verbundmaterial, die ein Blatt (2) umfasst und an einem Ende des Blatts (2) ein Befestigungsmittel (3) der Leitschaufel (1) an einem äußeren Element, wobei das Befestigungsmittel (3) in das Blatt (2) der Leitschaufel integriert ist, **dadurch gekennzeichnet, dass** die Leitschaufel (1) ein erstes, durch durchgehende Fasern (4), auch lange Fasern genannt, verstärktes Harz und ein zweites, durch kurze Fasern (5) mit einer Länge unter einigen Millimetern verstärktes Harz aufweist, wobei das erste und zweite Harz chemisch kompatibel oder identisch sind, wobei die durchgehenden Fasern (4) in der Außenhaut der Leitschaufel (1) oder in Übergangsposition zwischen der Außenhaut und dem Kern der Leitschaufel (1) angeordnet sind und die kurzen Fasern (5) im Kern der Leitschaufel (1) sowie zwischen der Übergangsposition und der Außenhaut angeordnet sind, wenn die durchgehenden Fasern in Übergangsposition angeordnet sind, wobei die durchgehenden Fasern (4) zur Versteifung der Leitschaufel (1) dienen und die kurzen, im zweiten Harz verteilten Fasern (5) zum Ausfüllen der nicht von den durchgehenden Fasern (4) verstärkten Abschnitte dienen und der Leitschaufel (1) ihre etwaige Endform verleihen.

2. Leitschaufel (1) eines Turbotriebwerks nach Anspruch 1, **dadurch gekennzeichnet, dass** eine selbe durchgehende Faser (4) über ihre Länge in der Außenhaut der Leitschaufel (1) und in Übergangsposition zwischen der Außenhaut und dem Kern der Leitschaufel (1) angeordnet ist.

3. Leitschaufel (1) eines Turbotriebwerks nach einem der Ansprüche 1 bis 2, **dadurch gekennzeichnet, dass** die durchgehenden Fasern (4) zwischen dem Blatt (2) und dem Befestigungsmittel (3) durchgehend sind.

4. Leitschaufel (1) eines Turbotriebwerks nach einem der vorangehenden Ansprüche, **dadurch gekennzeichnet, dass** nur ein Abschnitt der Haut der Leitschaufel (1) von einer Verstärkung mit durchgehenden Fasern (4) gebildet wird, wobei die Haut der Leitschaufel (1), die nicht von der Verstärkung mit durchgehenden Fasern (4) gebildet wird, mit einer Verstärkung aus kurzen Fasern (5) ausgefüllt ist.

5. Leitschaufel (1) eines Turbotriebwerks nach Anspruch 1, **dadurch gekennzeichnet, dass** das Befestigungsmittel (3) eine Plattform oder eine Wulst in Schwalbenschwanzform ist.

6. Leitschaufel (1) nach Anspruch 5, **dadurch gekennzeichnet, dass** das Blatt (2) und die Plattform ein L oder ein T bilden.

7. Leitschaufel (1) eines Turbotriebwerks nach Anspruch 1, **dadurch gekennzeichnet, dass** die kurzen Fasern (5) und die durchgehenden Fasern (4) aus der Gruppe ausgewählt sind, die von Glasfasern und Karbonfasern gebildet ist.

8. Leitschaufel (1) eines Turbotriebwerks nach Anspruch 1, **dadurch gekennzeichnet, dass** die durchgehenden Fasern (4) eindirektional oder gewebt sind.

9. Leitschaufel (1) eines Turbotriebwerks nach Anspruch 1, **dadurch gekennzeichnet, dass** das erste und zweite Harz thermoplastische Harze sind.

10. Leitschaufel (1) nach Anspruch 1, **dadurch gekennzeichnet, dass** das erste und zweite Harz thermohärtbare Harze sind.

11. Leitschaufel (1) eines Turbotriebwerks nach einem der vorangehenden Ansprüche, **dadurch gekennzeichnet, dass** die Haut der Leitschaufel (1) ferner einen Erosionsschutz aufweist.

12. Leitschaufel (1) eines Turbotriebwerks nach einem der vorangehenden Ansprüche, **dadurch gekennzeichnet, dass** das erste Harz und/oder das zweite Harz Chargen aufweist/aufweisen, die den Erosionsschutz der Leitschaufel sichern.

13. Herstellungsverfahren einer Leitschaufel (1) eines Turbotriebwerks aus Verbundmaterial, die ein Blatt (2) und ein Befestigungsmittel (3) an einem äußeren Element umfasst, wobei das Befestigungsmittel (3) mit dem Blatt (2) ein einziges Teil bildet, wobei die Leitschaufel (1) durchgehende Fasern (4), auch lange Fasern genannt, die auf mindestens einem Abschnitt der Haut der Leitschaufel (1) angeordnet sind, und ferner kurze Fasern (5) mit einer Länge unter einigen Millimetern aufweist, die die nicht von den durchgehenden Fasern (4) gefüllten Abschnitte ausfüllen, wobei das Verfahren mindestens die folgenden aufeinanderfolgenden Schritte umfasst:
a) Herstellen vorverfestigter Platten, die die mit einem ersten thermoplastischen Harz vorimprägnierten durchgehenden Fasern (4) aufweisen,
b) Zuschneiden der Platten in den erforderlichen Größen,
c) Verformen der Platten,
d) Gießen durch Einspritzen des Kerns des Blatts (2) und des Kerns des Befestigungsmittels (3) mit einem zweiten thermoplastischen, mit kurzen Fasern chargierten Harz, wobei das zweite Harz mit dem ersten Harz identisch oder mit dem ersten Harz chemisch kompatibel ist, wobei die vorverformten Platten in der Einspritzform die Rolle von Verbundeinsätzen spielen.

14. Leitschaufelstufe oder Rotorstufe eines Turbotriebwerks, das Leitschaufeln nach einem der Ansprüche 1 bis 12 aufweist.

## Claims

1. A turbomachine vane (1) made from a composite material comprising a blade (2) and, at one end of the blade (2), a means (3) for fastening said vane (1) to an outer element, said fastening means (3) being incorporated into the blade (2) of the vane, **characterized in that** said vane (1) comprises a first resin reinforced by continuous fibers (4), also called long fibers, and a second resin reinforced by short fibers (5) with a length that is smaller than a few millimeters, said first and second resins being chemically compatible or identical, the continuous fibers (4) being positioned in the skin end of the vane (1) or in an intermediate position between the skin end and the core of the vane (1) and the short fibers (5) being positioned at the core of the vane (1) as well as between the intermediate position and the skin end when the continuous fibers are positioned in the intermediate position, said continuous fibers (4) serving to stiffen the vane (1) and said short fibers (5) dispersed in the second resin serving to fill in the parts of the vane that are not reinforced by the continuous fibers (4) and giving the vane (1) its substantially final shape.

2. The turbomachine vane (1) according to Claim 1, **characterized in that** a same continuous fiber (4) is positioned over its length in the skin end of the vane (1) and in the intermediate position between the skin end and the core of the vane (1).

3. The turbomachine vane (1) according to any one of Claims 1 to 2, **characterized in that** the continuous fibers (4) are continuous between the vane (2) and the fastening means (3).

4. The turbomachine vane (1) according to any one of the preceding claims, **characterized in that** only part of the skin of the vane (1) is made up of a continuous fibers (4) reinforcement, the skin of the vane (1) not made up of the continuous fiber reinforcement (4) being filled in with a short fibers (5) reinforcement.

5. The turbomachine vane (1) according to Claim 1, **characterized in that** the fastening means (3) is a platform or a dovetail bulb.

6. The vane (1) according to Claim 5, **characterized in that** the blade (2) and the platform form an L or a T.

7. The turbomachine vane (1) according to Claim 1, **characterized in that** the short fibers (5) and the continuous fibers (4) are selected from among the group consisting of glass fibers and carbon fibers.

8. The turbomachine vane (1) according to Claim 1, **characterized in that** the continuous fibers (4) are unidirectional or woven.

9. The turbomachine vane (1) according to Claim 1, **characterized in that** the first and second resins are thermoplastic resins.

10. The vane (1) according to Claim 1, **characterized in that** the first and second resins are thermosetting resins.

11. The turbomachine vane (1) according to any one of the preceding claims, **characterized in that** the skin of the vane (1) further comprises protection against erosion.

12. The turbomachine vane (1) according to any one of the preceding claims, **characterized in that** the first resin and/or the second resin comprise(s) fillers protecting the vane from erosion.

13. A method for manufacturing a turbomachine vane (1) made from a composite material comprising a blade (2) and a means (3) for fastening to an outer element, said fastening means (3) forming a single piece with said blade (2), said vane (1) comprising continuous fibers (4), also called long fibers, positioned on at least part of the skin of the vane (1) and further comprising short fibers (5) with a length that is smaller than a few millimeters filling in the parts of the vane that are not filled in by the continuous fibers (4), said method successively comprising at least the following steps:
a) manufacturing pre-consolidated plates comprising continuous fibers (4) preimpregnated with a first thermoplastic resin;
b) cutting the plates to the required dimensions;
c) shaping the plates;
d) injection molding the core of the blade (2) and the core of the fastening means (3) with a second thermoplastic resin filled with short fibers, said second resin being identical to the first resin or chemically compatible with the first resin, said preformed plates acting as composite inserts in the injection mold.

14. A rectifier stage or rotor stage of a turbomachine comprising vanes according to any one of Claims 1 to 12.
